# EUROPÄISCHE PATENTANMELDUNG

(11) **EP 0 525 407 A2**
(43) Veröffentlichungstag der Anmeldung: **03.02.1993**
(21) Anmeldenummer: 92110993.0
(22) Anmeldetag: 29.06.1992
(51) Int. Cl.: F02D 35/02, F02D 41/16

(54) **Verfahren zur zylindersynchronen Berechnung von Betriebsparametern**

(30) Priorität: 27.06.1991 DE 4121242
(71) Anmelder: Klöckner-Humboldt-Deutz Aktiengesellschaft, D-51149 Köln (DE)
(72) Erfinder: Lutat, Martin, W-5204 St Augustin 3 (DE)

(57) **Zusammenfassung**

2.1 Bei dem erfindungsgemäßen Verfahren wird vor dem Einspritzvorgang eines jeden Zylinder, der für diesen Zylinder notwendige Einspritzbeginn und die Einspritzdauer anhand von aktuell erfaßter Betriebsgrößen bestimmt.

## Beschreibung

Die Erfindung betrifft ein Verfahren zum Bestimmen einer zumindest von einem sich wiederholenden Vorgang abhängigen Größe nach dem Oberbegriff des Patentanspruchs 1.

Es ist bekannt (DE-OS 34 26 799), bei einer Einrichtung zur Regelung der einer Brennkraftmaschine einzuspritzenden Kraftstoffmenge das Betriebsverhalten des Magnetventils, das die einzuspritzende Kraftstoffmenge steuert, zu berücksichtigen. Weitergehende Schwankungen von Parametern oder Ungleichheiten von Komponenten der Einspritzanlage oder der Brennkraftmaschine selbst werden dabei nicht berücksichtigt. So können sich während des Regelvorganges Parameter nachteiligerweise ändern. Zudem ist die bekannte Einrichtung zur Regelung der einer Brennkraftmaschine zuzuführende Kraftstoffmenge lediglich ausgelegt für die Ansteuerung eines einzigen Magnetventil, dessen Betriebsverhalten berücksichtigt wird. Angaben zur Regelung der einer Brennkraftmaschine zuzuführende Kraftstoffmenge mit mehr als einem Magnetventil werden nicht gemacht.

Der Erfindung liegt die Aufgabe zugrunde, ein Verfahren zum Bestimmen einer zumindest von einem sich wiederholenden Vorgang abhängigen Größe anzugeben, mit dem die Größe unter Berücksichtigung von Änderungen weiterer erfaßter Parameter und unter Berücksichtigung des Betriebsverhaltens einer Stellvorrichtung genau bestimmt werden kann und die genannten Nachteile vermieden werden.

Die Aufgabe wird durch die im kennzeichnenden Teil des Anspruchs 1 angegebenen Merkmale gelöst.

Zu diesem Zweck wird die Bestimmung, bei der es sich insbesondere um eine Berechnung handelt, von dem sich wiederholenden Vorgang ausgelöst. Damit ist es möglich, die Größe unter Berücksichtigungen von Änderungen erfaßter Parameter und des Betriebsverhaltens der Stellvorrichtung genau zu bestimmen, insbesondere dann, wenn sich der Vorgang zeitlich schneller wiederholt als sich die erfaßten Größen und Betriebsgrößen ändern. In besonders vorteilhafter Weise wird daher die Größe in Abhängigkeit der erfaßten Parameter und/oder des Betriebsverhaltens der Stellvorrichtung bestimmt (berechnet). Ebenso ist der Vorteil gegeben, daß die bestimmte Größe zeitlich direkt zur Steuerung der Stellvorrichtung zur Verfügung steht, ohne daß eine Regelung durchgeführt werden muß.

In Weiterbildung der Erfindung erfolgt die Bestimmung der Größe während einer vorgebbaren Zeitdauer. Dies hat den Vorteil, daß die Bestimmung (Berechnung) der Größe innerhalb der vorgebbaren Zeitdauer abgeschlossen ist, so daß danach erneut in Abhängigkeit von dem sich wiederholenden Vorgang eine Bestimmung durchgeführt werden kann. Dies ist beispielsweise von Vorteil, wenn die Bestimmung der Größe innerhalb eines Unterprogrammes oder in einer Interrupt-Routine durchgeführt wird. Denkbar ist auch eine Abhängigkeit mit der vorgebbaren Zeitdauer beispielsweise von dem sich widerholenden Vorgang.

In Weiterbildung der Erfindung ist der sich wiederholende Vorgang eine Impulsfolge, die insbesondere von einer der erfaßten Parameter ausgelöst wird. Handelt es sich bei dem wiederholenden Vorgang um eine Impulsfolge, kann diese in vorteilhafter Weise zur Auslösung der Bestimmung der Größe herangezogen werden. Dies hat dann den Vorteil, wenn Sensoren eine mechanische Bewegung (beispielsweise Drehbewegung) erfassen und diese in eine elektrische Impulsfolge umsetzen. Bei dem sich wiederholenden Vorgang kann es sich beispielsweise um die Drehzahl einer Brennkraftmaschine handeln, die ein geeigneter Drehzahlgeber erfaßt und die Impulsfolge auslöst beziehungsweise die erfaßte Drehzahl in eine elektrische Impulsfolge umwandelt.

In Weiterbildung der Erfindung löst jeder Impuls der Impulsfolge die Bestimmung der Größe aus. Dies hat den Vorteil, daß die ganze dem sich wiederholenden Vorgang entnehmbare Information zur Bestimmung der Größe herangezogen werden kann. Zu diesem Zweck wird in einer besonderen Ausgestaltung der Erfindung jeder Impuls der Impulsfolge und insbesondere dessen Vorderflanke zur Auslösung der Bestimmung der Größe herangezogen.

In Weiterbildung der Erfindung stellt die bestimmte Größe einen Zeitpunkt und/oder eine Zeitdauer dar. So kann, ausgelöst von einem Impuls der Impulsfolge, unter Berücksichtigung der erfaßten Parameter und des Betriebsverhaltens der Stellvorrichtung, der Zeitpunkt bestimmt werden, an dem die Stellvorrichtung betätigt wird. Neben der Bestimmung des Zeitpunktes, an dem die Stellvorrrichtung betätigt werden soll, kann auch die Zeitdauer bestimmt werden, während der die Stellvorrichtung aktiviert bzw. deaktiviert ist. Bei einer Kraftstoffeinspritzvorrichtung kann es sich bei dem Zeitpunkt beispielsweise um den Einspritzbeginn und bei der Zeitdauer um die Einspritzdauer handeln, während der eine Kraftstoffmenge in einen Brennraum der Brennkraftmaschine eingespritzt wird. Dabei handelt es sich bei dem sich wiederholenden Vorgang um einen die Verbrennung der Brennkraftmaschine darstellenden Vorgang. Hierbei kann es sich beispielsweise um die Stellung der Kurbelwelle bezüglich eines Zylinders der Brennkraftmaschine handeln, die mittels eines entsprechenden Sensors erfaßt wird. In einer besonderen Ausgestaltung der Erfindung wird die Bestimmung der Größe bei einer mehrzylindrigen Brennkraftmaschine für jeden einzelnen Zylinder durchgeführt. Dies hat den Vorteil, daß beispielsweise Alters- oder verschleißbedingte Unterschiede zwischen den einzelnen Zylindern erfaßt werden und bei der Bestimmung der Größe berücksichtigt werden. Darüberhinaus ist es auch denkbar, anhand der bestimmten Größe den Verbrennungszustand der Brennkraftmaschine zu erfassen und einen abnormalen Verbrennungszustand zu erkennen. Dieser liegt beispielsweise dann vor, wenn die bestimmte Größe (beispielsweise Einspritzbeginn bzw. Einspritzdauer) oberhalb oder unterhalb erwarteter oder vorgegebener Grenzwerte liegt.

In Weiterbildung der Erfindung wird vor dem Einspritzbeginn eines jeden Zylinders der Brennkraftmaschine der für diesen Zylinder einzustellende Einspritzbeginn und die Einspritzdauer berechnet. Diese zylindersynchrone und zylinderindividuelle Berechnung von Einspritzbeginn und Einspritzdauer hat wieder den Vorteil, daß Ungleichförmigkeiten zwischen den einzelnen Zylindern, die durch unterschiedliche Bautoleranzen oder Verschleiß bedingt sind, zu berücksichtigen. Durch eine entsprechende Korrektur von Einspritzbeginn oder Einspritzdauer sind diese Ungleichförmigkeiten ausgleichbar. Darüberhinaus hat die zylinderindividuelle Berechnung den Vorteil, daß die Betriebsgrößen der Brennkraftmaschine sowie weitere erfaßbare Parameter, wie z.B. eine Leistungsanforderung, aktuell erfaßt werden und bei der Berechnung von Einspritzbeginn und Einspritzdauer berücksichtigt werden, so daß diese genau bestimmt werden. Darüberhinaus ist eine Berücksichtigung von Größen der Stellvorrichtung (zum Beispiel Anzugs-oder Abfallzeiten eines Magnetventils) selbst sowie die Berücksichtigung der Zeitdauer, die für die Berechnung benötigt wird, möglich.

Die Erfindung wird anhand der in den Figuren gezeigten Zeitliniendiagrammen näher erläutert und am Beispiel der Kraftstoffeinspritzung einer Brennkraftmaschine näher beschrieben.

Es zeigen:
Fig. 1 ein erfindungsgemäßes Verfahren bei einem sich gleichmäßig wiederholenden Vorgang,
Fig.2 ein erfindungsgemäßes Verfahren bei einem sich ungleichmäßig wiederholenden Vorgang.

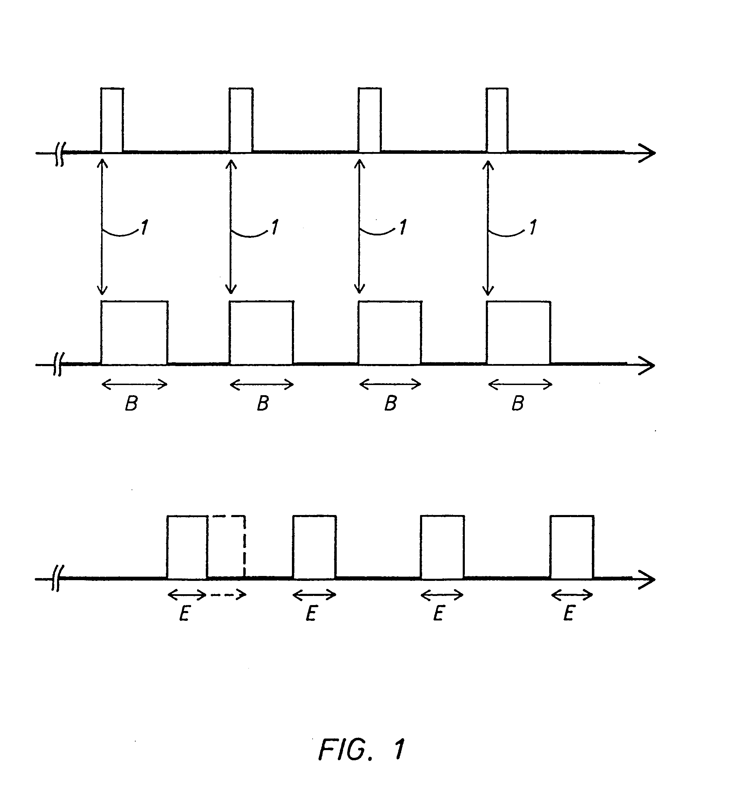

Figur 1 zeigt ein erfindungsgemäßes Verfahren bei einem sich gleichmäßig wiederholenden Vorgang. Der sich gleichmäßig wiederholende Vorgang ist in Fig. 1 durch die oben gezeigte Impulsfolge dargestellt, die mittels geeigneter Sensoren, die an den einzelnen Zylindern der Brennkraftmaschine angebracht sind, erzeugt werden. Diese Sensoren erfassen beispielsweise die Position der Kurbel-oder Nockenwelle bezüglich der einzelnen Zylinder. Von jedem abgegebenen Impuls wird die Bestimmung der Größen Einspritzbeginn und Einspritzdauer ausgelöst. Zu diesem Zweck wird, ausgehend von jedem Impuls der oben gezeigten Impulsfolge eine Berechnung mit der Zeitdauer B gestartet (Übereinstimmung der mit den Pfeilen 1 beziechneten Flanken), die insbesondere konstant ist. Während dieser Berechnung, die vorteilhafterweise in einer Interrupt-Routine stattfinden kann, werden die aktuellen Betriebsparameter der Brennkraftmaschine, wie Drücke, Temperaturen, Drehzahl, Spannung sowie Betriebsgrößen der Stellvorrichtung (z.B. Anzugszeit eines elektromagnetischen Ventils) und weitere Parameter, wie z.B. eine Leistungsanforderung (Gaspedalstellung) erfaßt. In Abhängigkeit der erfaßten Größen wird während der Berechnungszeitdauer B der Einspritzbeginn und die Einspritzdauer berechnet, die in dem unteren Diagramm angegeben sind. Die in dem unteren Diagramm der Fig. 1 gezeigte Impulsfolge muß bei einem sich gleichmäßig wiederholenden Vorgang nicht zwangsläufig gleichförmig sein. So ist es denkbar, daß in Abhängigkeit der erfaßten Größen die mit E bezeichnete Einspritzdauer variiert oder der Einspritzbeginn sich nicht direkt der abgeschlossenen Berechnung B anschließt.

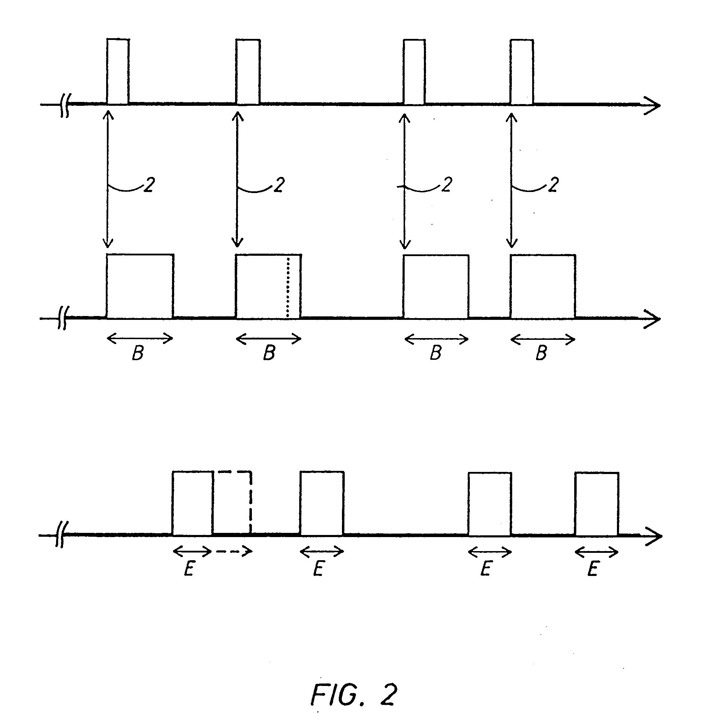

Figur 2 zeigt das erfindungsgemäße Verfahren bei einem sich ungleichmäßig wiederholendem Vorgang. Bei dem in Fig. 2 gezeigten oberen Diagramm treten die Impulse der einzelnen Zylinder in ungleichmäßigen Abständen voneinander auf. Von den ungleichmäßig voneinander auftretenden Impulsen wird die im mittleren Diagramm gezeigte Berechnungsimpulsfolge ausgelöst, wobei die ausgelöste Berechnungszeitdauer B in vorteilhafterweise kontant ist, darüberhinaus eine Variation der Berechnungszeitdauer B aber auch denkbar ist. In vorteilhafterweise wird wieder von der Vorderflanke der in dem oberen Diagramm gezeigte Impulsen die Berechnungszeitdauer B gestartet, so daß die durch die mit den Pfeilen 2 bezeichneten Vorderflanken der oben gezeigten Impulse und der in dem mittleren Diagramm gezeigten Berechnungszeitdauer B übereinstimmen. Während der Berechnungszeitdauer B erfolgt in analoger Vorgehensweise zu der in Fig. 1 beschriebenen Vorgehensweise die Berechnung von Einspritzbeginn und Einspritzdauer, die auch in Fig. 2 in dem unteren Diagramm wiedergegeben sind.

## Patentansprüche

1. Verfahren zum Bestimmen einer zumindest von einem sich wiederholenden Vorgang abhängigen Größe, wobei die Größe zur Steuerung zumindest einer Stellvorrichtung unter Berücksichtigung von erfaßten Parametern und eines Betriebsverhaltens der Stellvorrichtung herangezogen wird, dadurch gekennzeichnet, daß die Bestimmung der Größe von dem sich wiederholenden Vorgang ausgelöst wird.

2. Verfahren nach Anspruch 1, dadurch gekennzeichnet, daß die Bestimmung der Größe während einer vorgebbaren Zeitdauer erfolgt.

3. Verfahren nach Anspruch 1 oder 2, dadurch gekennzeichnet, daß der sich wiederholende Vorgang eine Impulsfolge ist, die insbesondere von einem der erfaßten Parameter ausgelöst wird.

4. Verfahren nach einem der vorhergehenden Ansprüche, dadurch gekennzeichnet, daß jeder Impuls der Impulsfolge, insbesondere dessen Vorderflanke, die Bestimmung der Größe auslöst.

5. Verfahren nach einem der vorhergehenden Ansprüche, dadurch gekennzeichnet, daß die bestimmte Größe einen Zeitpunkt und/oder eine Zeitdauer darstellt.

6. Verfahren nach einem der vorhergehenden Ansprüche, dadurch gekennzeichnet, daß der sich wiederholende Vorgang ein Verbrennungsvorgang einer Brennkraftmaschine ist.

7. Verfahren nach einem der vorhergehenden Ansprüche, dadurch gekennzeichnet, daß als Größe zur Steuerung der Stellvorrichtung zumindest Einspritzbeginn und Einspritzdauer einer Einspritzvorrichtung der Brennkraftmaschine bestimmt werden und die Stellvorrichtung zumindest ein elektromagnetisches Ventil ist.

8. Verfahren nach einem der vorhergehenden Ansprüche, dadurch gekennzeichnet, daß die Bestimmung der Größe bei einer mehrzylindrigen Brennkraftmaschine für jeden einzelnen Zylinder durchgeführt wird.
